# EUROPEAN PATENT APPLICATION

(11) **EP 4 844 398 A1**
(43) Date of publication of application: **25.11.2026**
(21) Application number: 25741965.5
(22) Date of filing: 15.01.2025
(51) Int. Cl.: G01N 30/56

(54) **COLUMN FILLING SYSTEM, COLUMN FILLING METHOD, AND PROGRAM**

(30) Priority: 18.01.2024 JP 2024006241
(71) Applicant: Daicel Corporation, Osaka-shi, Osaka 530-0011 (JP)
(72) Inventor: MINODA, Toshiharu, Tokyo 108-8230 (JP); TANABE, Hajime, Tokyo 108-8230 (JP); OKADA, Takeshi, Myoko-shi, Niigata 944-8550 (JP)
(74) Representative: Grünecker Patent- und Rechtsanwälte PartG mbB
(86) International application number: PCT/JP2025/001033
(87) International publication number: WO 2025/154740

(57) **Abstract**

The performance of a column is evaluated during packing of a filler or a packing operation is controlled to improve the performance of the column during packing. A column packing system includes one or more computers that execute packing processing of packing a column for a chromatograph with a slurry containing a filler from an upstream side of the column by feeding a solvent, and discharge pressure control for controlling a discharge pressure for feeding the solvent in accordance with a flow rate of the solvent flowing out from a downstream side of the column in the packing processing.

## Description

### Technical Field

The present disclosure relates to a column packing system, a column packing method, and a program.

### Background Art

In the related art, there has been proposed a packing device for a column for liquid chromatography, which packs a column by a wet slurry method. For example, a packing device has been proposed that includes a control mechanism that changes the flow rate of a pump and/or the pressure on the secondary side of the pump linearly and/or stepwise with the passage of time, and a pump that can change the flow rate and/or the pressure on the secondary side linearly and/or stepwise (Patent Document 1). In the packing device, the pump is driven in accordance with a time-lapse program of the flow rate and/or the pressure set in advance in the control mechanism. In addition, a column packing method has been proposed in which a filler dispersed in a predetermined solvent at a constant ratio is charged into a filling container packer connected to a column for a liquid chromatograph, and the filler is fed by a liquid feed pump (Patent Document 2). In the column packing method, the upper limit of the pressure of a pump for feeding liquid is increased in a gradient manner with time in accordance with the length of the column to be packed. Furthermore, there has been proposed a column manufacturing device including a pipe body, a filler supply mechanism disposed at one end part of the pipe body and configured to pack the pipe body with a filler slurry obtained by dispersing a filler in a solvent, and a packing control means disposed on the other end part side of the pipe body and configured to hold a flow rate and a pressure of the filler slurry during packing at a predetermined flow rate and pressure (Patent Document 3).

### Citation List

### Patent Document

Patent Document 1: JP 59-028660 A
Patent Document 2: JP 02-078954 A
Patent Document 3: WO 2015/186183

### Summary of Invention

### Technical Problem

In the related art, the performance evaluation of a column is performed after the column is packed, and cannot be determined during the packing. In addition, when the column is evaluated as being unacceptable, not only the work required for the manufacture is wasted, but also post-treatment of the column evaluated as being unacceptable is required, which is inefficient. An object of the present disclosure is to provide a technique for evaluating the performance of a column during packing of a filler or controlling a packing operation to improve the performance of the column during packing.

### Solution to Problem

The present disclosure can be implemented in the following aspects.

### (Aspect 1)

A column packing system including one or more computers that execute
packing processing of packing a column for a chromatograph with a slurry containing a filler from an upstream side of the column by feeding a solvent, and
discharge pressure control for controlling a discharge pressure for feeding the solvent in accordance with a flow rate of the solvent flowing out from a downstream side of the column in the packing processing.

### (Aspect 2)

The column packing system according to aspect 1, in which
the packing processing includes gradually increasing the discharge pressure, and
in the discharge pressure control, the one or more computers change a speed at which the discharge pressure is gradually increased, in accordance with the flow rate of the solvent flowing out from the downstream side of the column.

### (Aspect 3)

The column packing system according to aspect 2, in which in the discharge pressure control, the one or more computers change the speed at which the discharge pressure is gradually increased, in accordance with a difference between an amount of the solvent flowing out from the downstream side of the column per unit time and a predetermined target.

### (Aspect 4)

The column packing system according to aspect 3, in which in the discharge pressure control, the one or more computers change a length of the unit time when detecting pulsation in which the flow rate of the solvent flowing out from the downstream side of the column in the unit time increases and decreases.

### (Aspect 5)

A column packing system including one or more computers that execute
packing processing of packing a column for a chromatograph with a slurry containing a filler from an upstream side of the column by feeding a solvent, and
evaluation of a performance of the column after the packing based on a flow rate of the solvent flowing out from a downstream side of the column in the packing processing.

Note that the contents of "Solution to Problem" may be provided as a system including a device such as a computer or a plurality of devices, a method executed by one or more computers, or a program to be executed by one or more computers. Note that a recording medium that stores the program may be provided.

### Advantageous Effects of Invention

According to the disclosed technique, it is possible to provide a technique for evaluating the performance of a column during packing of a filler or controlling a packing operation to improve the performance of the column during packing.

### Brief Description of Drawings

FIG. 1 is a diagram for describing an example of a packing system according to a first embodiment.
FIG. 2 is a diagram for describing a relationship between a packing pressure and an amount of a solvent flowing out from a column according to a comparative example.
FIG. 3 is a diagram for describing a relationship between a pressure rising speed of a pump and the performance of the column at the time of packing.
FIG. 4 is a processing flowchart illustrating an example of packing processing.
FIG. 5 is a diagram for describing the packing processing.
FIG. 6 is a diagram for describing an example of an allowable range of deviation from a reference value.
FIG. 7 is a diagram for describing a change in a pressure rising speed of discharge pressure.
FIG. 8 is a diagram illustrating an example of a packing system according to a second embodiment.
FIG. 9 is a diagram illustrating an example of a packing system according to a third embodiment.
FIG. 10 is a diagram illustrating an example of a packing system according to a fourth embodiment.
FIG. 11 is a diagram illustrating an example of a packing system according to a fifth embodiment.
FIG. 12 is a diagram illustrating an example of a packing system according to a sixth embodiment.
FIG. 13 is a diagram illustrating an example of a packing system according to a seventh embodiment.
FIG. 14 is a diagram for describing an example in which the magnitude relationship between a predetermined reference value of the solvent outflow amount and the mass flow rate based on a measured value acquired from a measuring instrument is reversed.

### Description of Embodiments

Embodiments will be described below with reference to the drawings.

### <First Embodiment>

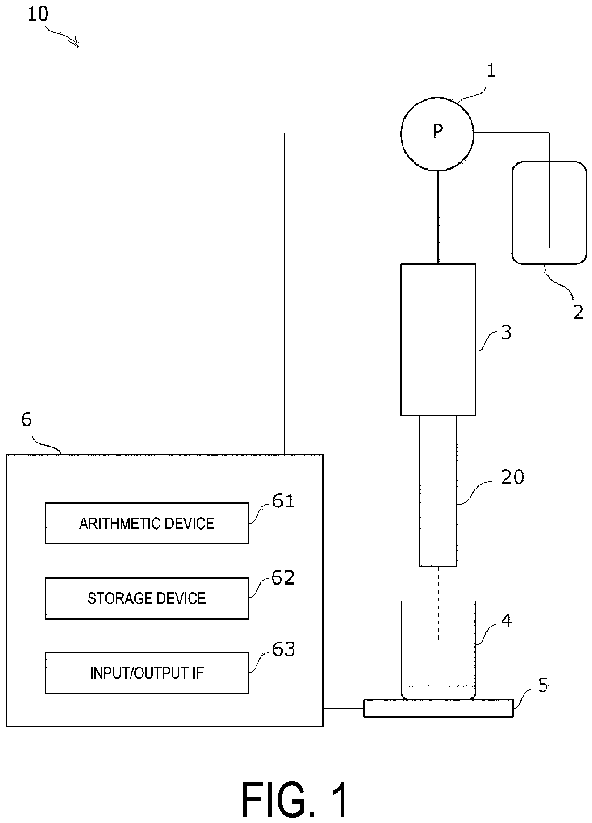

FIG. 1 is a diagram for describing an example of a packing system. A packing system 10 of FIG. 1 is a system for packing, by a wet method, a filler into a column 20 used in column chromatograph. The column 20 is, for example, a stainless steel tube. The column 20 is, for example, a chiral column used for High Performance Liquid Chromatography (HPLC), but is not limited thereto. The filler is a general filler that can hold a sample to be measured and perform optical resolution. The packing system 10 includes a pump 1, a first container 2, a packer 3, a second container 4, a measuring instrument 5, and a control device 6.

The first container 2 is a container for storing an organic solvent to be fed in packing processing. The first container 2 is, for example, a glass bottle, and stores a solvent therein. The inside of the first container 2 may be pressurized. The first container 2 and the pump 1 are connected by a pipe. The pipe is made of, for example, resin, but the material is not particularly limited.

The pump 1 sucks up the solvent from the first container 2 and sends it to the packer 3. The pump 1 is, for example, a pneumatic booster packing pump, and may be connected to a nitrogen cylinder or a compressor for driving. The pump 1 can gradually increase the discharge pressure to a set value and maintain the discharge pressure at the set value by feedback control such as PID control. Furthermore, the pump 1 according to the present embodiment is capable of changing the change rate when the discharge pressure is increased, for example, in accordance with a signal from the control device 6. The pump 1 and the packer 3 are connected to each other by a pipe. The pipe is made of, for example, stainless steel, but the material is not particularly limited.

The packer 3 is a device for packing the column 20 with the filler by a wet method. The packer 3 is fixed in a predetermined orientation by a tripod, a dedicated stand, or the like. The packer 3 is connected to one end of the column 20 via an attachment. The user creates a slurry containing a filler using a solvent, and pours the slurry into the packer 3. Then, the pump 1 feeds the solvent stored in the first container 2, and the slurry poured into the packer 3 is packed in the column 20 by the resulting liquid pressure. At the time of packing, the pumped solvent flows out from the other end of the column 20 on the opposite side to the one end connected to the packer 3.

The second container 4 is a container such as a graduated cylinder for receiving the solvent flowing out from the column 20. The second container 4 is made of, for example, resin, but the material is not particularly limited. The measuring instrument 5 is a weight measuring instrument such as a platform scale. The measuring instrument 5 outputs the measured weight to the control device 6, for example, as a digital signal.

The control device 6 is a computer such as a Personal Computer (PC) or a Programmable Logic Controller (PLC), and includes an arithmetic device 61, a storage device 62, and an input/output interface (IF) 63. The arithmetic device 61 is a processor such as a Central Processing Unit (CPU) and performs each type of processing according to the embodiment by executing a program. Specifically, the arithmetic device 61 controls the discharge pressure of the pump 1 on the basis of the outflow amount of the solvent obtained from the measuring instrument 5. The storage device 62 is at least any one of a main storage device such as a Random Access Memory (RAM) and a Read Only Memory (ROM), or an auxiliary storage device (secondary storage device) such as a Hard-disk Drive (HDD), a Solid State Drive (SSD), and a flash memory. The main storage device temporarily stores a program read out by the arithmetic device 61 and secures a work area of the arithmetic device 61. The auxiliary storage device stores a program executed by the arithmetic device 61 and other data. It is assumed that the storage device 62 stores, in advance, information indicating a packing condition (control profile) for each combination of the type and particle diameter of a filler and the size (inner diameter and length) of the column, for example. Note that a control profile includes a predetermined target value of the solvent outflow amount that changes with time, and information that defines a method of changing the discharge pressure of the pump 1 when the solvent outflow amount deviates from the target value. The input/output IF 63 continuously acquires information indicating the weight from the measuring instrument 5. The input/output IF 63 outputs a signal for controlling the discharge pressure of the pump 1 on the basis of the processing of the arithmetic device 61. The input/output IF 63 may include a user interface such as a touch screen, a keyboard, or a pointing device.

Note that after the packing, the user detaches the column 20 from the packer 3 and attaches an end cap to the end part of the column 20, thereby completing the column as a product.

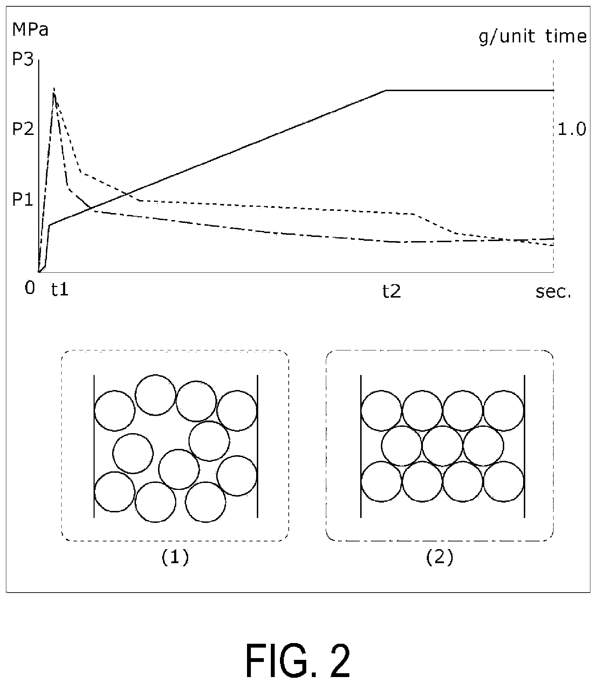

FIG. 2 is a diagram for describing a relationship between a packing pressure and an amount of a solvent flowing out from a column according to a comparative example. In a graph in an upper part of FIG. 2, the solid line indicates a process value (MPa) of the discharge pressure of a pump. The broken line indicates a solvent outflow amount per unit time, measured using a measuring instrument 5 at the time of packing, for a column determined to have insufficient performance in post-manufacture evaluation. The one dot chain line indicates a solvent outflow amount (g/s) measured using the measuring instrument 5 at the time of packing, for a column determined to have sufficient performance in the post-manufacture evaluation. In the comparative example, a pump 1 gradually increases the discharge pressure from the start of packing to a predetermined time t2, and then performs PID control and maintains a constant pressure. At t1 immediately after the packing of a slurry containing a filler from a packer 3 into a column 20 is started, a relatively large amount of the solvent for pumping the slurry flows out. Thereafter, when a cake layer is formed in the column 20, a pressure loss occurs due to the deposited particles of the filler, and the outflow amount of the solvent decreases.

Note that the performance of the column can be evaluated by, for example, peak symmetry. Peak symmetry is an indicator represented by a symmetry factor (tailing factor). The symmetry factor is calculated on the basis of the shape of the peak when a sample is loaded onto the column. Specifically, the symmetry factor is calculated by dividing the peak width at 1/20 of the height of the peak by a value twice the length of the rising side of the top of the peak. That is, when the coefficient is 1.0, it indicates that the front and rear of the peak are an object. A coefficient greater than 1.0 indicates tailing, and a coefficient less than 1.0 indicates leading. For example, when the coefficient is within a predetermined allowable range above and below 1.0, the performance of the column can be determined to be sufficient. Note that the peak symmetry may vary depending on whether the packing operation is good or bad.

In such a comparative example, the inventors of the present application have found that there is a relationship between the performance of the column and the solvent outflow amount. For example, when the flow rate of the solvent flowing out from the column increases, the symmetry factor decreases. A lower part of FIG. 2 schematically illustrates an assumed state of particles of the filler in the column. The schematic diagram surrounded by a broken line represents an example of a column evaluated as having insufficient performance. It is understood that a column evaluated as having insufficient performance has an inappropriate density of the filler, and for example, when the density is insufficient, the solvent pumped by the pump 1 easily passes through gaps between the particles and flows out from the outlet of the column in a relatively large amount. The schematic diagram surrounded by a one dot chain line represents an example of a column evaluated as having sufficient performance. It is understood that a column evaluated as having sufficient performance is packed with particles at an appropriate density, a predetermined pressure loss occurs when the pump 1 pumps the solvent, and the solvent flows out from the outlet of the column at a predetermined flow rate.

The difference in the performance of the column as described above may occur even when the profile of the pressure rising speed of the pump 1 is the same. Therefore, in the present disclosure, the performance of the column is evaluated on the basis of the flow rate of the solvent flowing out from the column at the time of packing, or the conditions of the packing operation are changed to improve the performance of the column during the packing. That is, a target outflow amount of the solvent is determined in advance, and the performance of the column is evaluated on the basis of the deviation between the actual outflow amount and the target during the packing. When the deviation between the actual outflow amount and the target is larger than a predetermined reference, the performance of the column is improved by changing the change rate (pressure rising speed) of the discharge pressure of the pump 1.

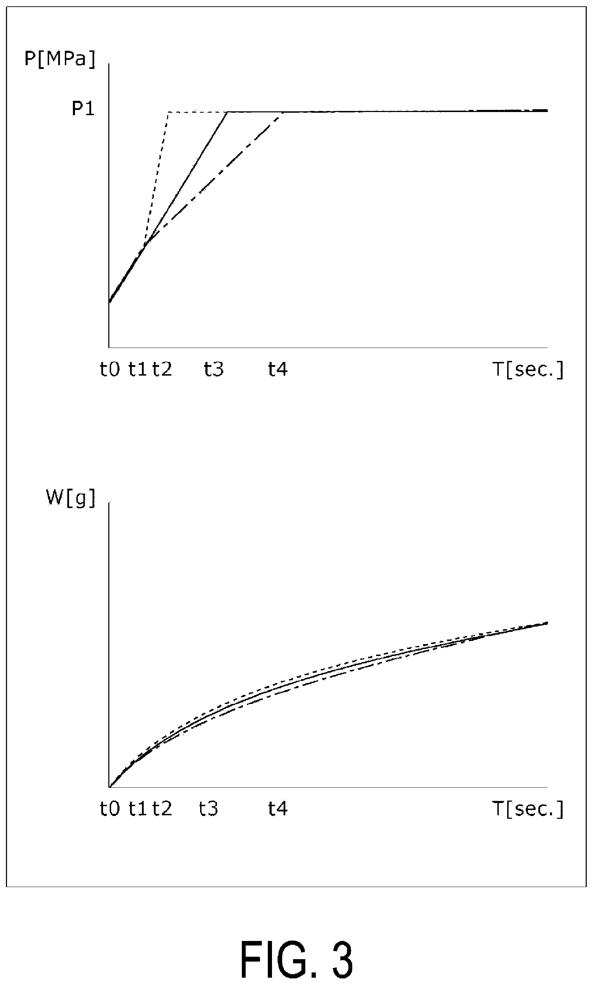

FIG. 3 is a diagram for describing a relationship between a pressure rising speed of the pump 1 and the performance of the column 20 at the time of packing. In a graph in an upper part of FIG. 3, the vertical axis represents a pressure P (MPa), and the horizontal axis represents an elapsed time T (sec.). In the example of FIG. 3, the period in which the discharge pressure of the pump 1 is gradually increased is included after the operation of the pump 1, and the discharge pressure is controlled to be constant after the discharge pressure reaches a predetermined pressure P1. The solid line indicates a set value of the pressure rising speed as a reference, and indicates an example in which the discharge pressure of the pump 1 is raised to P1 at the same change rate until the time t3 after the start of packing. The broken line indicates an example in which the pressure rising speed is increased at the time t1 during packing, and the discharge pressure reaches P1 at time t2. The one dot chain line indicates an example in which the pressure rising speed is decreased at time t1 during packing, and the discharge pressure reaches P1 at time t4. In a graph in a lower part of FIG. 3, the vertical axis represents an integrated solvent outflow amount W(g), and the horizontal axis represents an elapsed time T (sec.). The solid line, the broken line, and the one dot chain line indicate the integrated value of the solvent outflow amount in the case of packing at the corresponding pressure rising speed illustrated in the graph of the upper part. The symmetry factor of the column measured after the packing was 1.02 in the case of the reference pressure rising speed indicated by the solid line, 1.10 in the case of increasing the pressure rising speed indicated by the broken line, and 0.98 in the case of decreasing the pressure rising speed indicated by the one dot chain line. As described above, during the packing of the filler into the column, when the pressure rising speed of the pump 1 was increased, the peak symmetry was changed in the tailing direction, and when the pressure rising speed of the pump 1 was decreased, the peak symmetry was changed in the leading direction. The solvent outflow amount was slightly smaller than the reference when the pressure rising speed of the pump 1 was increased, and was slightly larger than the reference when the pressure rising speed of the pump 1 was decreased. Note that when there are a plurality of components to be detected, the chromatogram includes a plurality of peaks, and the symmetry factor can be calculated for each of the peaks. Even when a plurality of peaks were included, each of the plurality of peak symmetries changed in the same manner in accordance with the change in the pressure rising speed of the pump 1.

On the basis of the preliminary measurement results as described above, a profile that is a reference of the pressure rising speed used for controlling the pump 1, a reference value of the solvent outflow amount from the outlet of the column 20, an allowable range of deviation from the reference value, and a change algorithm of the pressure rising speed in a case where the solvent outflow amount deviates from the allowable range are set.

### <Packing Processing>

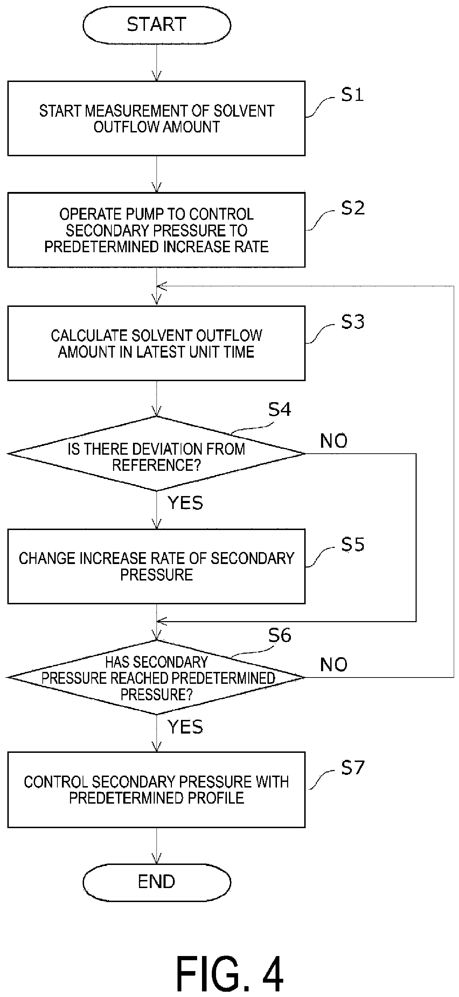

FIG. 4 is a processing flowchart illustrating an example of packing processing. The packing processing is started by, for example, a user operation on the control device 6 or the like. First, the measuring instrument 5 starts measuring the solvent outflow amount (FIG. 4: S1). Note that the measurement may be started by a user operation on the measuring instrument 5, or the measuring instrument 5 may start the measurement in cooperation with the control device 6. The measuring instrument 5 outputs the integrated solvent outflow amount. After S1, the control device 6 continuously acquires the measured value from the measuring instrument 5.

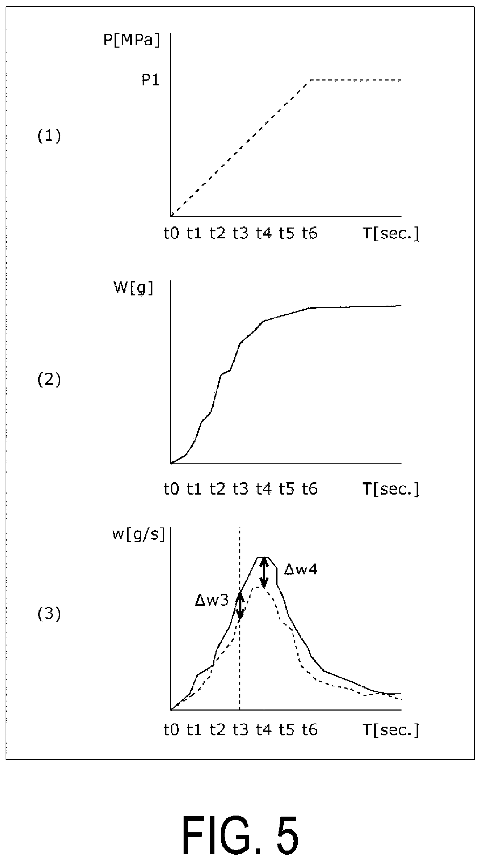

After S1, the arithmetic device 61 of the control device 6 operates the pump 1 to increase the discharge pressure of the pump 1 on the basis of the initial control profile (FIG. 4: S2). FIG. 5 is a diagram for describing the packing processing. An upper part (1) of FIG. 5 illustrates an example of a control profile. In the graph of FIG. 5 (1), the horizontal axis represents a time T (sec.), and the vertical axis represents a pressure P (MPa). The initial control profile gradually increases the discharge pressure of the pump 1 to P1 in proportion to the elapsed time from the start of packing to time t6. After time t6, the pressure is PID-controlled to be constant at the pressure P1. Note that after time t6, the pressure may be controlled to be constant until the packing is completed, or the pressure may be controlled to be changed in proportion to the elapsed time or in a stepwise manner.

A middle part (2) of FIG. 5 illustrates an example of information continuously transmitted from the measuring instrument 5 to the control device 6. In the graph of FIG. 5 (2), the horizontal axis represents the time T (sec.), and the vertical axis represents the solvent outflow amount W(g) acquired from the measuring instrument 5 at each time point. After the measuring instrument 5 starts measuring the solvent outflow amount in S1, the control device 6 acquires the measured values as illustrated in FIG. 5 (2) from the measuring instrument 5.

After S2, the arithmetic device 61 calculates the solvent outflow amount in the latest unit time (i.e., moving average of solvent outflow amount) using the measured value acquired from the measuring instrument 5 (FIG. 4: S3). The unit time can be set as appropriate, and is one second, for example. In this step, the mass flow rate is calculated. The timing of executing this step may be one or more predetermined time points such as t3 in FIG. 5. In a lower part (3) of FIG. 5, the horizontal axis represents the time T (sec.), and the vertical axis represents the latest outflow amount w(g) per second. The solid line in FIG. 5 (3) represents the mass flow rate based on the measured value acquired from the measuring instrument 5. That is, the value indicated by the solid line at the time point of processing is calculated in S3. Note that the broken line in FIG. 5 (3) represents a predetermined reference value of the solvent outflow amount. As described above, the reference value of the solvent outflow amount is determined in advance on the basis of a measurement result of the solvent outflow amount at the time of packing of a column determined to have sufficient performance after packing.

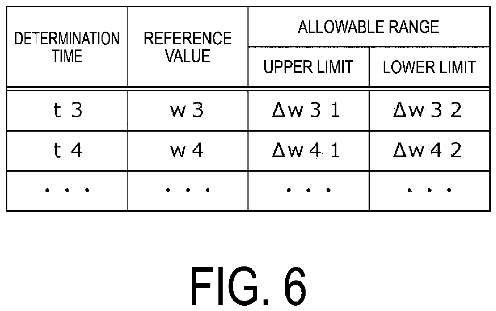

After S3, the arithmetic device 61 determines whether the solvent outflow amount calculated in S3 deviates from a predetermined reference (FIG. 4: S4). As described above, the threshold representing the allowable range of the deviation of the solvent outflow amount from the reference value is also determined in advance. FIG. 6 is a diagram for describing an example of an allowable range of deviation from a reference value. The table of FIG. 6 includes attributes of "determination time", "reference value", and "allowable range". The allowable range includes an "upper limit value" and a "lower limit value". In the field of "determination time", information indicating a timing at which the determination of S3 and S4 is performed is registered, for example, as an elapsed time from the start of the operation of the pump 1. In the field of "reference value", for example, a reference value of the solvent outflow amount indicated by a broken line in FIG. 5 (3) is registered. In the field of "allowable range", an upper limit value and a lower limit value indicating an allowable range of deviation from the reference value are registered. When such conditions are set, in S4, when a difference Δw between the mass flow rate indicated by the solid line in FIG. 5 (3) and the reference value indicated by the broken line (e.g., Δw3 at time point t3 and Δw4 at time point t4 in FIG. 5 (3)) is out of the range from the lower limit value to the upper limit value, it is determined that the solvent outflow amount has deviated from the predetermined reference.

When it is determined in S4 that the solvent outflow amount has deviated from the reference (S4: YES), the arithmetic device 61 changes the increase rate (pressure rising speed) of the discharge pressure of the pump 1 (FIG. 4: S5). In this step, the changed increase rate is determined in accordance with the difference Δw between the flow rate per unit time based on the measured value and the reference value. That is, the gradient of the set value of the step-up period illustrated in FIG. 5 (1) is changed. For example, when the difference Δw is large beyond the allowable range, the symmetry factor is predicted to be smaller than the appropriate range (i.e., acceptance criterion as a product), and thus the pressure rising speed is changed to be increased in order to increase the symmetry factor in S4. The degree of change can be determined in proportion to the magnitude of the difference Δw.

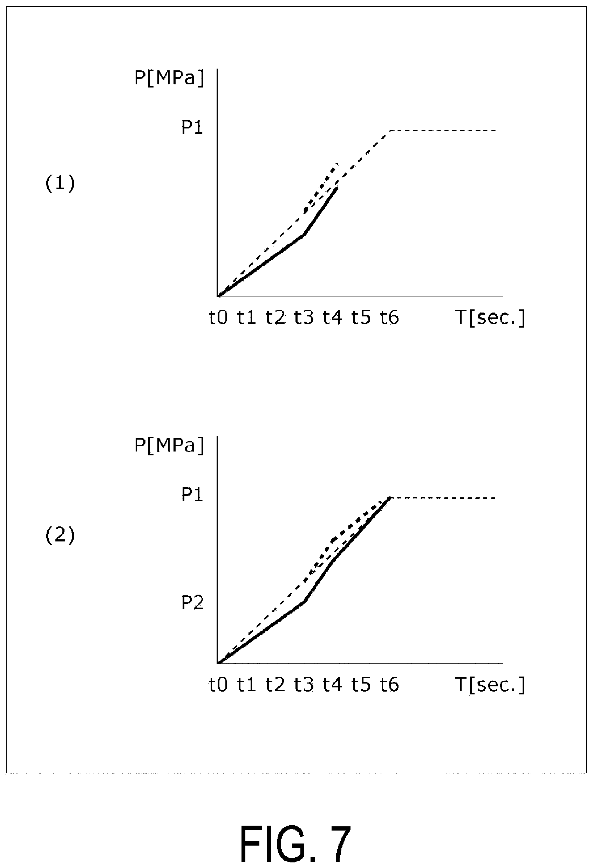

FIG. 7 is a diagram for describing a change in the pressure rising speed of the discharge pressure. The graph of FIG. 7 illustrates an example of changing the control profile. In the graph of FIG. 7, the horizontal axis represents the time T (sec.), and the vertical axis represents the pressure P (MPa). The thin broken line is a graph representing an initial control profile (set value (target value, set-point variable, SV) in PID control), and is the same as FIG. 5 (1). The thick broken line is a graph representing the set value after the pressure rising speed is changed at t3. The solid line is a graph representing the measured pressure rising speed (process variable, PV). For example, at t3, when it is determined that the difference Δw between the flow rate per unit time based on the measured value and the reference value is larger than an upper limit-side threshold Δw31, as illustrated in FIG. 7 (1), the pressure rising speed is changed to be increased in accordance with the magnitude of the difference Δw.

Note that the changed pressure rising speed may be determined using, for example, SV and PV in PID control. For example, at time point t3 in FIG. 7 (1), the changed pressure rising speed may be determined such that the slope corresponds to the ratio of the difference between SV (P1) at t6 and PV (P2) at t3 to the difference between t6 and t3 (i.e., (P1 - P2)/(t6 - t3)), and control may be performed on the basis of the SV derived from this.

Note that, for example, when a pneumatic booster packing pump is used, pulsation in which the flow rate of the solvent discharged by the pump 1 repeatedly increases and decreases may occur. Therefore, it is preferable that the unit time (section (window) in moving average) is set in advance to a length in which pulsation does not occur. In addition, in a case where pulsation occurs during the packing processing, the above-described unit time may be increased in order to reduce the influence of the pulsation. In this case, the reference value to be compared with the flow rate per unit time is also increased in accordance with the unit time. Note that the pulsation can be detected on the basis of, for example, the fluctuation of the flow rate from t1 to t6 in FIG. 7.

The determination in S4 may be performed based on not only the deviation from the reference at one time point but also the deviations from the reference at a plurality of time points. For example, when the deviation from the reference exceeds a threshold in one of the upper and lower directions at all of a plurality of predetermined time points, it may be determined that the deviation from the reference has occurred.

After S5 or when it is determined that the solvent outflow amount has not deviated from the reference in S4 (S4: NO), the arithmetic device 61 determines whether the pump 1 has reached a predetermined pressure (FIG. 4: S6). In this step, it is determined whether the pressure has reached the target pressure (P1 in examples of FIG. 5 (1) and FIG. 7 (1)) set in the initial control profile. Note that this step may be determined by the pump 1 instead of the control device 6. When it is determined that the pressure has not reached the predetermined pressure (S6: NO), the arithmetic device 61 returns to S3 and repeats the processing.

In the case where the processing is repeated, when it is determined in t4 that the difference Δw between the flow rate per unit time based on the measured value and the reference value is smaller than a lower limit-side threshold Δw42, as illustrated in FIG. 7 (2), the set value may be changed to decrease the pressure rising speed in accordance with the magnitude of the difference Δw, for example.

On the other hand, when it is determined in S6 that the pressure has reached the predetermined pressure (S6: YES), the arithmetic device 61 controls the discharge pressure of the pump 1 on the basis of a predetermined profile (FIG. 4: S7). In this step, for example, the target pressure (P1 in example of FIG. 5 (1)) set in the initial control profile is maintained. Note that this step may be performed by the pump 1 instead of the control device 6. Thereafter, for example, after a predetermined time has elapsed from the start of the packing, the pump 1 stops the operation, and the packing processing of the filler into the column 20 is completed.

According to the packing processing as described above, the performance of the column being manufactured can be evaluated on the basis of the difference between the flow rate of the solvent flowing out during the packing and the target. When the difference is larger than the threshold, the performance of the column can be improved by changing the pressure rising speed of the discharge pressure of the pump 1.

### <Second Embodiment>

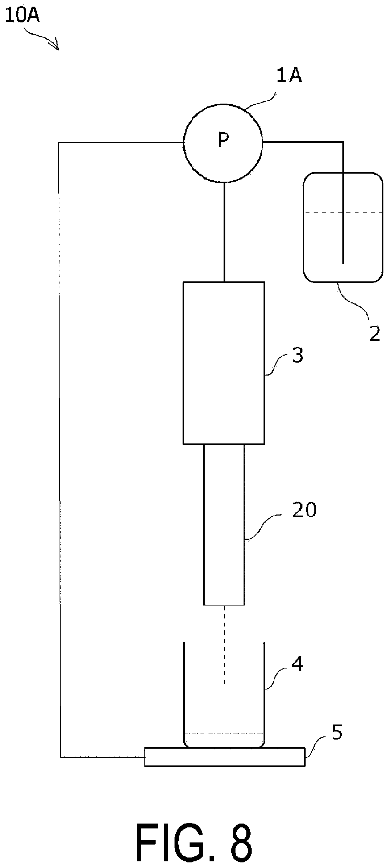

FIG. 8 is a diagram illustrating an example of a packing system 10A according to a second embodiment. Note that the same components as those of the first embodiment are denoted by corresponding reference numerals, and description thereof is omitted. In the example of FIG. 8, the packing system 10A does not include the control device 6. The packing system 10A controls the discharge pressure for a pump 1A to feed the solvent in accordance with the flow rate of the solvent flowing out from the downstream side of a column 20. That is, the pump 1A includes a computer including an arithmetic device for controlling the discharge pressure of the pump itself, a storage device for holding information used for processing, and an input/output interface for acquiring information from a measuring instrument 5. Even with such a configuration, it is possible to evaluate the performance of the column being manufactured or improve the performance of the column during the packing.

### <Third Embodiment>

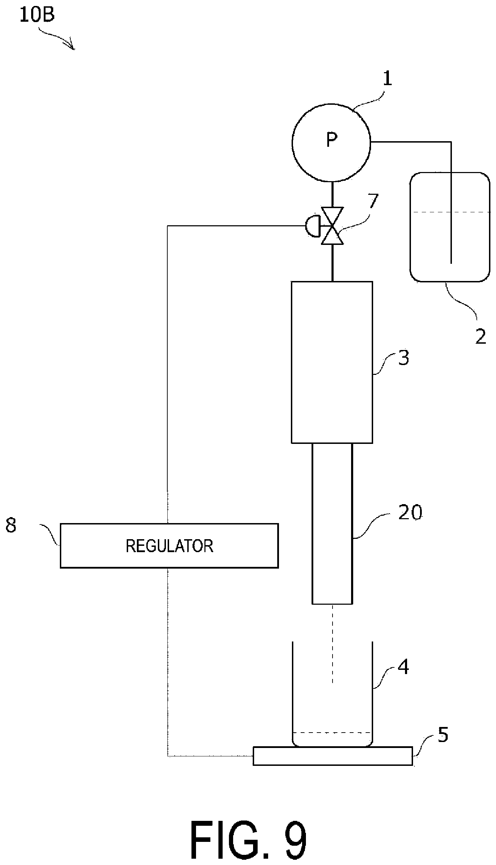

FIG. 9 is a diagram illustrating an example of a packing system 10B according to a third embodiment. Note that the same components as those of the first embodiment and the like are denoted by corresponding reference numerals, and description thereof is omitted. In the example of FIG. 9, the packing system 10B does not include the control device 6. The packing system 10B also includes a regulating valve (control valve) 7 between a pump 1 and a packer 3, and a regulator 8 between a measuring instrument 5 and the regulating valve 7. The regulator 8 acquires the flow rate of the solvent flowing out from the downstream side of a column 20 from the measuring instrument 5, and controls the regulating valve 7 in accordance with the acquired flow rate, thereby changing the discharge pressure for the pump 1 to feed the solvent to the packer 3. That is, the regulator 8 functions as a computer including an arithmetic device for controlling the discharge pressure, a storage device for holding information used for processing, and an input/output interface for acquiring information from the measuring instrument 5. Even with such a configuration, it is possible to evaluate the performance of the column being manufactured or improve the performance of the column during the packing.

### <Fourth Embodiment>

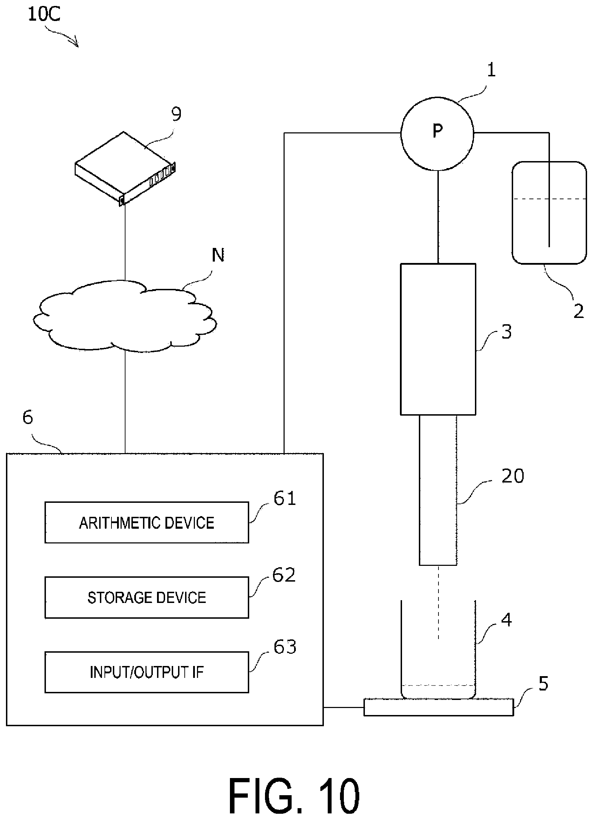

FIG. 10 is a diagram illustrating an example of a packing system 10C according to a fourth embodiment. Note that the same components as those of the first embodiment and the like are denoted by corresponding reference numerals, and description thereof is omitted. In the example of FIG. 10, the packing system 10C includes a control device 6 which is a PLC, and the control device is communicably connected to a server 9 via a communication network N. When the storage capacity of a storage device 62 of the PLC (control device 6) is limited, for example, information acquired from a measuring instrument 5, an operation log related to the control of a pump 1, and the like are transmitted from the control device 6 to the server 9 and accumulated in the server 9. Note that the communication network N includes, for example, an Internet Protocol (IP) network, and devices connected to the network can communicate with each other in accordance with a predetermined communication protocol. A part of the network may be a telephone network (fixed telephone network or mobile communication network), an ad hoc network, an intranet, a Virtual Private Network (VPN), a Local Area Network (LAN), a wireless LAN (Wireless LAN), a Wide Area Network (WAN), or the Internet.

Note that the server 9 may be connected to the pump 1 and the measuring instrument 5 via the communication network N and the control device 6 which is a PLC or the like, and may be a system that provides control related to the packing processing described above on the cloud. Even with these configurations, it is possible to evaluate the performance of the column being manufactured or improve the performance of the column during the packing.

### <Fifth Embodiment>

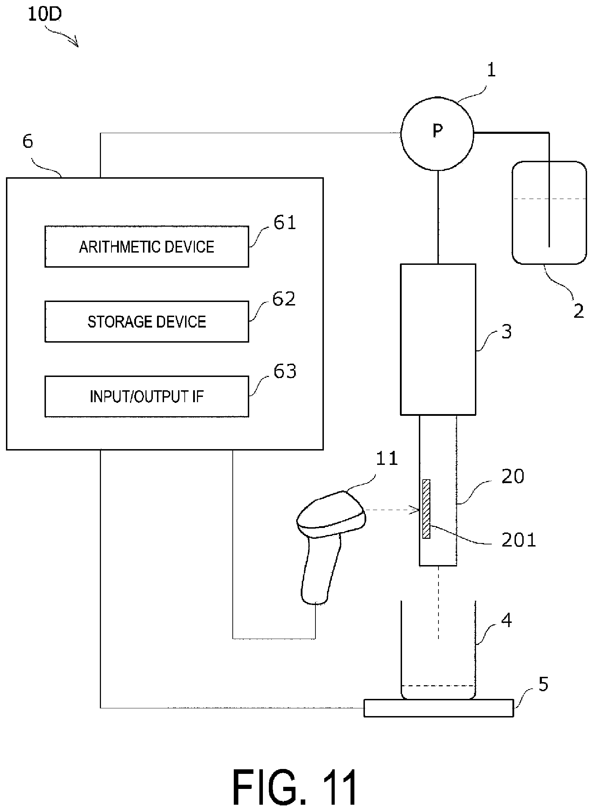

FIG. 11 is a diagram illustrating an example of a packing system 10D according to a fifth embodiment. Note that the same components as those of the first embodiment and the like are denoted by corresponding reference numerals, and description thereof is omitted. In the example of FIG. 11, the packing system 10D includes a reading device 11 connected to a control device 6. The reading device is a device capable of reading identification information 201 such as one-dimensional codes (barcodes), two-dimensional codes, and wireless tags (IC tags, Radio Frequency Identification (RFID) tags). The identification information 201 is attached to a column 20. The identification information 201 includes, for example, information indicating the type of the column. On the other hand, a storage device 62 of the control device 6 stores, in association with information indicating the type of the column, a profile that is a reference of the pressure rising speed of a pump 1, a reference value of the solvent outflow amount from the outlet of the column 20, an allowable range of deviation from the reference value, a change algorithm of the pressure rising speed in a case where the solvent outflow amount deviates from the allowable range, and the like, which are to be applied to the column. Then, before the packing processing, an arithmetic device 61 of the control device 6 acquires information indicating the type of the column 20 via the reading device 11, and performs an operation in accordance with the type of the column 20 in the packing processing. According to such an aspect, it is possible to suppress erroneous setting of the operation when a plurality of types of columns are manufactured. Note that the packing system 10D may not include the reading device 11, and the user may select from the settings for each type of column held in the storage device 62 in advance.

### <Sixth Embodiment>

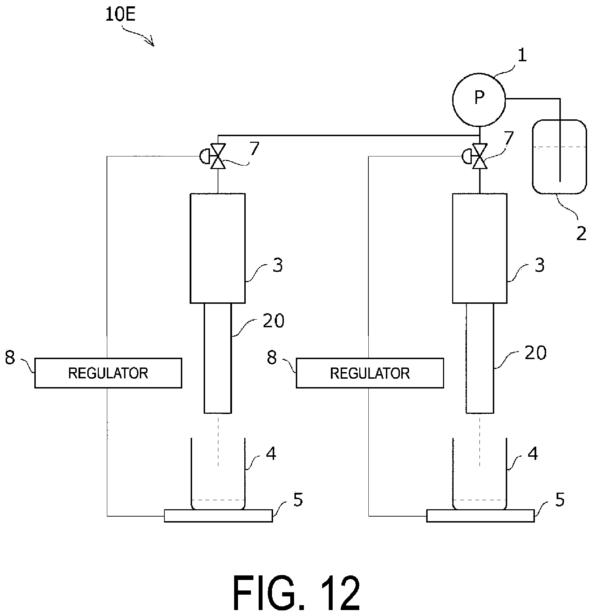

FIG. 12 is a diagram illustrating an example of a packing system 10E according to a sixth embodiment. Note that the same components as those of the third embodiment and the like are denoted by corresponding reference numerals, and description thereof is omitted. In the example of FIG. 12, the packing system 10E includes a combination of a regulating valve 7, a packer 3, a column 20, a second container 4, a measuring instrument 5, and a regulator 8 in parallel, and the regulating valve 7 is feedback-controlled in each combination. With such a configuration, the column 20 can be efficiently manufactured. Note that the present disclosure is not limited to the third embodiment, and the first, second, fourth, or fifth embodiment may be configured such that the columns 20 are connected in parallel and packed. Alternatively, three or more columns 20 may be connected in parallel and packed.

### <Seventh Embodiment>

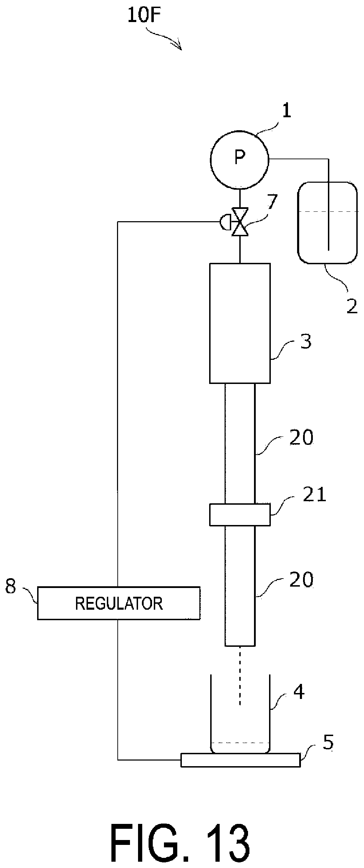

FIG. 13 is a diagram illustrating an example of a packing system 10F according to a seventh embodiment. Note that the same components as those of the third embodiment and the like are denoted by corresponding reference numerals, and description thereof is omitted. In the example of FIG. 13, a plurality of columns 20 are connected in series via a connection pipe 21, and the solvent is allowed to flow out from the column 20 at the tip to a second container 4. A regulating valve 7 is feedback-controlled on the basis of the flow rate of the solvent flowing out from the column 20 at the tip. Even with such a configuration, the column 20 can be efficiently manufactured. Note that the present disclosure is not limited to the third embodiment, and the first, second, fourth, fifth, or sixth embodiment may be configured such that the columns 20 are connected in series and packed. Alternatively, three or more columns 20 may be connected in series and packed.

### <Modified Examples>

Each of the configurations, combinations thereof, and the like in each of the embodiments is an example, and additions, omissions, substitutions, and other changes of the configurations may be made as appropriate without departing from the spirit of the present disclosure. The present disclosure is not limited by the embodiments and is limited only by the claims. Each embodiment disclosed in the present specification can be combined with any other feature disclosed herein.

At least some of the functions of the control device 6 illustrated in FIG. 1 may be implemented by being distributed in a plurality of devices. The order of the packing processing illustrated in FIG. 4 may be changed or the packing processing may be executed in parallel as long as the result does not change. For example, S1 and S2 may be interchanged or may be executed at the same time. The table illustrated in FIG. 6 is an example of a database, and the information may be divided and stored in a plurality of tables by normalization, or may be further combined with other information and stored in a single table by denormalization, as appropriate.

Furthermore, the processing may be performed using a volume flow rate instead of the mass flow rate of the solvent flowing out from the column 20.

In the packing processing of the above-described embodiment, it is also possible to perform only the performance evaluation of the column 20 without changing the discharge pressure of the pump 1. It is useful to determine whether the column 20 is acceptable, without performing the performance evaluation again after the column 20 is manufactured, or just to screen the columns 20 to be sampled for performance evaluation.

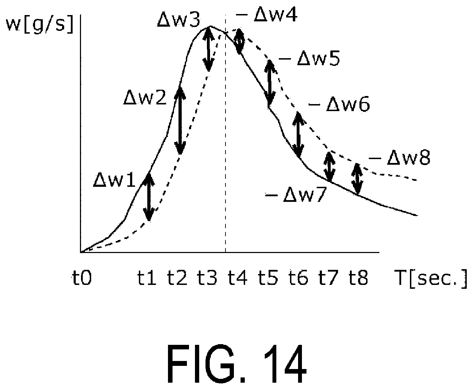

FIG. 14 is a diagram for describing an example in which the magnitude relationship between a predetermined reference value of the solvent outflow amount and the mass flow rate based on a measured value acquired from the measuring instrument 5 is reversed. In FIG. 14, the horizontal axis represents a time T (sec.), and the vertical axis represents a latest outflow amount w(g) per second. The solid line in FIG. 14 represents the mass flow rate based on the measured value acquired from the measuring instrument 5. The broken line in FIG. 14 represents a predetermined reference value of the solvent outflow amount. The arrow indicates the magnitude of the difference. For example, when the slurry concentration is low, the initial flow velocity tends to be relatively high and the final flow velocity tends to be low. Conversely, when the slurry concentration is high, the initial flow velocity tends to be relatively low and the final flow velocity tends to be high. From such a background, in the example illustrated in FIG. 14, the magnitude relationship between the predetermined reference value of the solvent outflow amount indicated by the broken line and the mass flow rate based on the measured value acquired from the measuring instrument 5 indicated by the solid line is reversed between time t3 and time t4. Note that in FIG. 14, a negative sign is added to the difference Δw when the measured value is lower than the reference value.

In such a case, for example, in steps S4 and S5 in FIG. 3, the increase rate of the secondary pressure may be changed using the differences Δw at a plurality of time points. For example, the trend of the mass flow rate based on the measured value acquired from the measuring instrument 5 indicated by the solid line in FIG. 14 is continuously monitored and compared with the trend of the predetermined reference value of the solvent outflow amount indicated by the broken line. That is, the differences Δw at a plurality of time points are comprehensively evaluated, instead of independently determining whether the difference Δw is within the allowable range at a predetermined time point as illustrated in FIG. 5 (3) and FIG. 6. At this time, the timing (e.g., time point, interval, total number, or the like) of monitoring the difference Δw can be set as appropriate. In the example of FIG. 14, time point t0 to time point t8 are illustrated, but the timing is not particularly limited. In addition, in the evaluation using the plurality of differences Δw, for example, the plurality of differences Δw may be integrated, and it may be determined whether the integrated value of the differences Δw deviates from the allowable range that is a reference. In addition, in the evaluation using the plurality of differences Δw, an approximate expression may be obtained using a plurality of measured values for FIG. 14 or other graphs (e.g., graphs of outflow amount (g), flow velocity (g/s), and the like), and the pressure rising speed of the discharge pressure of the pump 1 may be changed in consideration of the difference predicted in the future. Furthermore, for example, the difference Δw may be calculated after synchronizing the reference graph and the graph based on the measured value with reference to the maximum and minimum values, the inflection point, the singular point, or the like of each curve in FIG. 14 or other graphs. In addition, when the magnitude relationship between the reference value of the solvent outflow amount and the mass flow rate based on the measured value is reversed, different changing methods may be applied to the increase rate of the discharge pressure of the pump 1 before and after the reversal.

Furthermore, the present disclosure includes a method and a computer program for performing the aforementioned processing, and a computer readable recording medium storing the program. The recording medium on which the program is stored enables the aforementioned processing by causing a computer to execute the program.

The computer readable recording medium refers to a recording medium that can accumulate information such as data or programs by electrical, magnetic, optical, mechanical, or chemical actions and can be read from a computer. Among such recording media, examples of recording media detachable from a computer include flexible disks, magneto-optical disks, optical disks, magnetic tapes, and memory cards. Furthermore, as recording media fixed to a computer, there are HDD, Solid State Drive (SSD), ROM, and the like.

### Reference Signs List

10: Packing system
1: Pump, 2: First container, 3: Packer, 4: Second container, 5: Measuring instrument, 6: Control device (computer), 61: Arithmetic device, 62: Storage device, 63: Input/output interface (IF)
20: Column

## Claims

1. A column packing system comprising one or more computers that execute
packing processing of packing a column for a chromatograph with a slurry containing a filler from an upstream side of the column by feeding a solvent, and
discharge pressure control for controlling a discharge pressure for feeding the solvent in accordance with a flow rate of the solvent flowing out from a downstream side of the column in the packing processing.

2. The column packing system according to claim 1, wherein
the packing processing includes gradually increasing the discharge pressure, and
in the discharge pressure control, the one or more computers change a speed at which the discharge pressure is gradually increased, in accordance with the flow rate of the solvent flowing out from the downstream side of the column.

3. The column packing system according to claim 2, wherein in the discharge pressure control, the one or more computers change the speed at which the discharge pressure is gradually increased, in accordance with a difference between an amount of the solvent flowing out from the downstream side of the column per unit time and a predetermined target.

4. The column packing system according to claim 3, wherein in the discharge pressure control, the one or more computers change a length of the unit time when detecting pulsation in which the flow rate of the solvent flowing out from the downstream side of the column in the unit time increases and decreases.

5. A column packing system comprising one or more computers that execute
packing processing of packing a column for a chromatograph with a slurry containing a filler from an upstream side of the column by feeding a solvent, and
evaluation of a performance of the column after the packing based on a flow rate of the solvent flowing out from a downstream side of the column in the packing processing.

6. A column packing method executed by one or more computers, the method comprising
packing processing of packing a column for a chromatograph with a slurry containing a filler from an upstream side of the column by feeding a solvent, and
discharge pressure control for controlling a discharge pressure for feeding the solvent in accordance with a flow rate of the solvent flowing out from a downstream side of the column in the packing processing.

7. A program for causing one or more computers to execute
packing processing of packing a column for a chromatograph with a slurry containing a filler from an upstream side of the column by feeding a solvent, and
discharge pressure control for controlling a discharge pressure for feeding the solvent in accordance with a flow rate of the solvent flowing out from a downstream side of the column in the packing processing.
